# EUROPÄISCHE PATENTSCHRIFT

(11) **EP 3 078 874 B1**
(45) Veröffentlichungstag und Bekanntmachung des Hinweises auf die Patenterteilung: **10.10.2018**
(21) Anmeldenummer: 16000791.0
(22) Anmeldetag: 06.12.2012
(51) Int. Cl.: F16D 25/08, F16D 48/02, F16D 23/12

(54) **AUSRÜCKVORRICHTUNG**
DISENGAGING DEVICE
DISPOSITIF DE DEBRAYAGE

(30) Priorität: 26.01.2012 DE 102012201118; 26.01.2012 DE 102012201121; 26.01.2012 DE 102012201119; 29.06.2012 DE 102012211268
(43) Veröffentlichungstag der Anmeldung: 12.10.2016
(62) Teilanmeldung aus: 12821108.3
(73) Patentinhaber: Schaeffler Technologies AG & Co. KG, 91074 Herzogenaurach (DE)
(72) Erfinder: Ortmann, Simon, 06112 Halle (Saale) (DE)

(56) Entgegenhaltungen:
- DE-A1-102008 057 650
- DE-A1-102008 060 585
- DE-A1-102011 015 281

## Beschreibung

Die Erfindung bezieht sich auf eine Vorrichtung zum Ausrücken einer Kupplung, insbesondere einer Kupplung und Antriebsstrang eines Kraftfahrzeugs gemäß Oberbegriff des Anspruches 1.
Vorrichtungen zum Aus- bzw. Einrücken einer Kupplung sind in einer Vielzahl von Ausführungsformen im Stand der Technik bekannt. Insbesondere sind in den letzten Jahren sog. konzentrische Nehmerzylinder als Betätigungselement für eine Ausrückvorrichtung für eine Kupplung verwendet worden, bei denen ein Gehäuse konzentrisch um eine Achse angeordnet ist und einen ringförmigen Druckraum ausbildet, in dem ein ringförmiger Kolben geführt ist. Zur Betätigung der Kupplungen wird dann ein Fluid unter Druck in den Druckraum gepresst, so dass sich der Kolben, der sich über ein Ausrücklager an einer Teller- bzw. Hebelfeder einer Kupplung abstützt, zur Betätigung dieser Hebel- bzw. Tellerfeder aus dem Druckraum heraus bewegt. Eine derartige konzentrischer Nehmerzylinder kann in axialer und radialer Richtung über ein Deckellager am Kupplungsdeckel abgestützt sein, so dass Relativbewegungen zwischen der Kupplung und dem Ausrücker vermieden werden. Derart ausgebildete Ausrückvorrichtungen werden als deckelfeste Ausrücker bezeichnet. So zeigen die DE 10 2008 047 834 A1, DE 10 2008 060 585 A1 sowie die EP 1 985 877 A2 Vorrichtungen zum Ausrücken einer Kupplung gemäß dem Oberbegriff des Patentanspruchs 1. Die US 2002/0020600 A1 zeigt eine Ausrückvorrichtung, wobei ein Ausrücklager axial versetzt zu einem Deckellager angeordnet ist. Durch diese Anordnung wird ein hoher axialer Bauraum benötigt. Die FR 2 745 616 A1 zeigt eine Nietverbindung zwischen einem Gehäuse und einem Befestigungsflansch.
Allerdings benötigen konzentrische Nehmerzylinder für die Führungslänge für den Ringkolben einen gewissen axialen Bauraum, der insbesondere bei modernen Kompakt- und Kleinwagen quer eingebautem Motor eng begrenzt ist. Insbesondere bei den oben beschriebenen deckelfesten Ausrückern muss dabei auch noch Bauraum für das Deckellager vorgesehen werden. Darüber hinaus ist die Montage des Deckellagers bei deckelfesten Ausrückern auf den Zylindergehäuse nach dem Stand der Technik aufwendig und kompliziert, da eine Lösung für die Anbindung der Druckleitung gefunden werden muss und gleichzeitig die Befestigung des Innenrings des Deckellagers am Gehäuse gewährleistet werden muss. Eine Ausrückvorrichtung weist ein Gehäuse auf, das konzentrisch um eine Achse angeordnet ist und einen ringförmigen Druckraum ausbildet. In diesem Druckraum ist axial beweglich ein Ringkolben angeordnet, der zum Druckraum hin mit einer Dichtung abgedichtet ist und so in Verbindung mit dem Gehäuse einen abgeschlossenen Druckraum, beispielsweise für ein hydraulisches Fluid, bildet. Am Druckraum abgewandeten Ende des Ringskolbens befindet sich ein Ausrücklager, dass zur Anlage einen Teller- oder Hebelfeder einer Kupplung ausgebildet ist. Das Gehäuse ist über ein Deckellager axial und radiale am Kupplungsdeckel festgelegt. Dabei ist das Deckellager derart ausgebildet, dass der Innenring des Deckellagers einen Innendurchmesser aufweist, der größer als der Außendurchmesser des Außenrings des Ausrücklagers ist. Durch diese Ausführung ergibt sich die Möglichkeit, die Ausrückvorrichtung so auszubilden, dass das Ausrücklager während des Betätigungshobels ganz oder teilweise in den Innenring des Deckellagers eintritt oder sogar hindurchgeführt wird. Somit weist die Ausrückvorrichtung gemäß der vorliegenden Erfindung lediglich zwei bewegte bzw. drehende Teile auf, nämlich den Außenring des Ausrücklagers und den Außenring des Deckellagers. Dadurch ergibt sich die Möglichkeit, ein einfach am Gehäuse der Ausrückvorrichtung montierbares Deckellager zur Verfügung zu stellen. Gleichzeitig wird durch die radiale Schachtelung der Lager der axiale Bauraum verringert.

Weiterhin ergibt sich die Möglichkeit, das Ausrücklager mit einer Kugellaufbahn auszuführen, die einen Durchmesser größer des Druckraumdurchmessers des Gehäuses aufweist. Durch diese Abstufung der Durchmesser vom Druckraumgehäuse und Ausrücklager ist es möglich, das Ausrücklager derart auszubilden, dass es in der maximalen eingefahrenen Position des Ringkolbens zumindest teilweise über das Druckraumgehäuse geschoben ist, d. h., das Druckraumgehäuse tritt beim Verbringen des Kolbens in die eingefahrene Position, die sog. Min-Extension, in den Innenring des Ausrücklagers ein, so dass der Innenring und die Laufbahn der Wälzkörper des Ausrücklagers das Druckraumgehäuse zumindest teilweise umfassen. Durch diese Anordnung kann der axial notwendige Bauraum weiter reduziert werden, was, wie oben bereits erwähnt, insbesondere für quer eingebaute Motoren in Klein- und Kompaktwagen von großer Bedeutung ist.

Die Befestigung der Ausrückvorrichtung an der Kupplung erfolgt über den Außenring des Deckellagers. Diese erweist Mittel zur Befestigung am Kupplungsdeckel auf, insbesondere Bohrungen zur Aufnahme von Verbindungsmitteln wie Nieten oder Schrauben.

Zudem ergibt sich auch die Möglichkeit, das Gehäuse der Ausrückvorrichtung aus Kunststoff auszuführen, was zu einer erheblichen Gewichtseinsparung beiträgt. Dabei kann die Zuführung des hydraulischen Fluids in dem Druckraum über einen Leitungsadapter erfolgen, der mit dem Gehäuse verbunden ist. Vorteilhaft kann auch dieser Leitungsadapter aus Kunststoff hergestellt sein.

Weiterhin kann der Leitungsadapter mittels einer Nietverbindung zug- und momentenfest mit dem Gehäuse verbunden werden.

Am Deckellager kann ein Befestigungsflansch vorgesehen sein, der mittels einer Pressverbindung am Innenring des Deckellagers festgelegt ist. Über diesen Befestigungsflansch kann eine Befestigung des Deckellagers am Ausrücker bzw. Druckraumgehäuse erfolgen. Dabei kann für die Durchführung des Leitungsadapters eine Öffnung in Befestigungsflansch vorgesehen sein, durch die der Leitungsadapter vor oder nach Montage des Deckelflanschs am Druckraumgehäuse mit dem Druckraumgehäuse verbunden werden kann. Zur Transportsicherung des Befestigungsflanschs und mittelbar des Deckellagers am Druckraumgehäuse kann eine Verbindung des Befestigungsflansches mit dem Druckraumgehäuse mittels Klemmvorrichtungen, insbesondere mittels eines oder mehrerer Kunststoffbauteile mit Tannenzapfengeometrie vorgesehen werden. Diese Kunststoffbauteile werden durch Öffnungen in Befestigungsflansch geführt und unter Vorlast in komplementäre Öffnungen am Druckraumgehäuse gepresst, so dass eine formschlüssige Verbindung entsteht. Da das Druckraumgehäuse in montiertem Zustand von der Vorlastfeder, die sich über das Ausrücklager an der Tellerfeder der Kupplung abstützt, gegen den Befestigungsflansch gepresst wird, muss dabei die Transportsicherung im Einbauzustand keinerlei Kräfte übertragen, so dass die vergleichsweise geringe Festigkeit einer derartigen Tannenzapfverbindung für die Transportsicherungszwecke ausreichend ist.

In einer alternativen Ausführungsform ergibt sich die Möglichkeit, den Befestigungsflansch für den Ausrücker bzw. das Druckraumgehäuse integriert, d.h. einstückig mit dem Innenring des Ausrücklagers auszubilden. Anders ausgedrückt wird der Innenring des Deckellagers derart verlängert, dass eine direkte Befestigungsmöglichkeit für das Gehäuse des Ausrückers am Innenring geschaffen wird. Derart kann die notwendige Anzahl an Teilen weiter reduziert und die Montage vereinfacht werden. Zusätzlich ergibt sich durch die Vermeidung eines separaten Innenrings eine Reduzierung des notwendigen Innendurchmessers für das Deckellager, wodurch eine weitere Kostenersparnis möglich ist. Vorteilhaft kann der Flansch mit integrierter Laufbahn für die Wälzkörper des Deckellagers im Tiefziehverfahren ausgebildet werden. Alternativ sind natürlich auch andere, an sich für die Herstellung von Lagerringen bekannte Herstellungsverfahren möglich.

Anschlüsse für Fluidleitungen an ein Gehäuse müssen bei hydraulischen System häufig vorgenommen werden. Insbesondere bei einer hydraulischen Kupplungsbetätigung für eine Kraftfahrzeugkupplung ergibt sich oftmals das Problem, dass ein von der Kupplung über das Ausrücklager auf den Nehmerzylinder übertragenes Schleppmoment abgestützt werden muss. Hierfür wird im Stand der Technik häufig die Anschlussleitung genutzt, so dass ein Bedarf für eine Verbindung zwischen Leitungsadapter und Gehäuse besteht, die nicht nur gegen Abziehen gesichert ist, sondern auch Momente übertragen kann.

Hierzu wird oftmals bei konzentrischen Nehmerzylindern die Anschlusspfeife einstückig mit dem Gehäuse gebildet und seitlich weggeführt, um derart das Schleppmoment abstützen zu können. Die Montage von Nehmerzylinder derartig ausgebildeten Anschlusspfeifen ist aber kompliziert, weil die weit abstehende Anschlusspfeife die Montage behindert. Darüber hinaus ist insbesondere bei sog. deckelfesten Ausrückern, d. h. Ausrückern mit Nehmerzylindern, die über ein Deckellager radial und axial am Kupplungsdeckel befestigt sind, ist es aufgrund der notwendigen Montage des Deckellagers am Ausrückergehäuse schwierig, eine einstückig gefertigte Anschlusspfeife vorzusehen.

Es besteht daher die Aufgabe, eine Möglichkeit zur Anbindung eines Leitungsadapter an ein Gehäuse zur Verfügung zu stellen, die einfach und kostengünstig auszuführen ist und Zugkräfte sowie Momente aufnehmen kann.

Leitungsadapter bestehen im Wesentlichen aus einem in Kunststoff ausgeführten, rohrförmigen Anschlussteil, das gerade oder gewinkelt ausgeführt sein kann, und einen Anschlussbereich zur Verbindung mit dem Gehäuse des Ausrückers. In diesem Anschlussbereich ist eine Dichtung oder ein Dichtsitz für eine komplementäre Dichtung am Gehäuse vorgesehen, mittels derer die Verbindung zwischen Gehäuse und Leitungsadapter fluiddicht ausgeführt wird. Die Verbindung zwischen dem Leitungsadapter und dem Gehäuse wird mittels eines oder mehrerer Nieten sichergestellt. Dabei wird der Nietvorgang derart ausgeführt, dass keine oder nur eine sehr geringe Verformung entlang des Nietstabes stattfindet, sondern lediglich die Endbereiche des Niets zur Bildung eines Kopfes umgeformt werden. Es entsteht somit durch den Nietvorgang in der Bohrung, durch die das Niet an Leitungsadapter und Gehäuse geführt wird, keine Lochleibungsspannung, vielmehr werden die einzelnen Teile durch den Formschluss der Nietköpfe miteinander verbunden. Eine Lochleibungsspannung tritt dabei erst auf, wenn die Verbindung durch äußere Kräfte wie Zug oder Moment belastet wird.

Zur Erhöhung der Sicherheit der Verbindung kann es vorgesehen sein, dass ineinander greifende Elemente für zusätzliche mechanische Festigkeit an dem Gehäuse bzw. dem Leitungsadapter vorgesehen sind.

So kann es z. B. vorgesehen sein, dass vorspringende Elemente an einem Bauteil, beispielsweise dem Gehäuse, mit Bohrungen zur Aufnahme eines oder mehreren Nieten, vorgesehen sind, die entsprechend komplementäre Vorsprünge am jeweils anderen Bauteil, als beispielsweise dem Leitungsadapter, zangenartig zu umfassen und so die Verbindung verstärken, wobei der komplementäre Vorsprung ebenfalls eine oder mehrere Bohrungen für ein oder mehrere Nieten aufweist.

Alternativ oder zusätzlich kann es vorgesehen sein, die Verbindungsbereiche oder mit zusätzlichen Quetschrippen zu versehen, die beim Einsetzen der Bauteile ineinander deformiert werden und so für einen Reibschluss zwischen den Bauteilen sorgen. Selbstverständlich ist es auch möglich, zusätzliche Vorsprünge neben den eigentlichen, mit Nutbohrungen versehenen Verbindungsbereichen vorzusehen, die mit Quetschrippen versehen sind.

Die Erfindung bezieht sich auf eine Vorrichtung zum Ausrücken einer Kupplung, insbesondere einer Kupplung im Antriebsstrang eines Kraftfahrzeuges gemäß Oberbegriff des Anspruches 1.

Ausrückvorrichtungen für Kupplungen im Antriebsstrang eines Kraftfahrzeugs sind im Stand der Technik in vielfältiger Ausführung bekannt. In den letzten Jahren sind jeweils zunehmend sog. konzentrische Nehmerzylinder zum Einsatz gekommen, bei denen ein Gehäuse konzentrisch um eine Welle, beispielsweise die Getriebeeingangswelle, angeordnet ist und einen ringförmigen Druckraum bildet, in den ein ringförmiger Kolben axial verlagerbar angeordnet ist. Der Kolben trägt auf seinem Druckraum abgewandten Ende ein Ausrücklager, das an der Teller- oder Hebelfeder einer Kupplung anliegt. Durch Anpressen von hydraulischen Fluid in den Druckraum wird der Kolben dann aus dem Druckraum hinausbewegt und betätigt die Teller- bzw. Hebelfeder der Kupplung.

Eine besondere Ausführungsform der konzentrische Nehmerzylinder ist sog. deckelfeste Ausrücker, bei dem das Nehmerzylindergehäuse über ein Deckellager axial und radial am Deckel der Kupplung festgelegt ist. Da sich der Kupplungsdeckel mit der Kupplung mitdreht, ist dieses Deckellager nötig, um das Ausrückergehäuse drehfest lagern zu können. Da aber über ein Drehlager immer auch ein Schleppmoment übertragen wird, greift an den Ausrückergehäuse bei Betrieb des Antriebsstrangs immer ein Drehmoment an, das in ein feststehendes Bauteil, beispielsweise die Getriebeglocke, abgeleitet werden muss. Hierzu ist es im Stand der Technik häufig vorgesehen, in der Getriebeglocke ein entsprechendes Abstützungselement vorzusehen, das die Fluidleitung zum Gehäuse in tangentialer Richtung bezüglich der Achse abstützt. Problematisch ist dabei, dass beim Auftreten eines unvorhergesehenen starken Schleppmoments die Zuleitung beschädigt werden kann, was zum Versagen des Ausrücksystems führen kann. Eine solche Vorrichtung wird in der Schrift DE 10 2008 060 585 A1 beschrieben. Diese zeigt eine Vorrichtung zum Ausrücken einer Kupplung gemäß des Oberbegriffs des Patentanspruchs 1.

Es stellt sich daher die Aufgabe, eine Ausrückvorrichtung zur Verfügung zu stellen, bei der ein erhöhtes Schleppmoment nicht zu einer Beschädigung führt. Die Lösung dieser Aufgabe gelingt mit der Ausrückvorrichtung gemäß Anspruch 1. Vorteilhafte Weiterbildung ergeben sich aus den Unteransprüchen.

Eine erfindungsgemäße Vorrichtung zum Ausrücken einer Kupplung weist ein Gehäuse auf, das konzentrisch um eine Achse angeordnet ist und einen Druckraum ausbildet, in dem axial beweglicher Ringkolben angeordnet ist. Das Gehäuse ist über ein Deckellager an einem Kupplungsdeckel abgestützt, eine Zuleitung für die Zuführung eines hydraulischen Fluids ist mit dem Gehäuse verbunden. Als Überlastschutz ist ein Blech drehfest mit dem Gehäuse verbunden, dass einem Kragarm parallel zur Zuleitung aufweist und an dem Kragarmende wenigstens ein Haltearm zur Abstützung der Zuleitung gegen Momentenbelastung aufweist.

Das Blech ist mit einem Ringbereich ausgestattet, der konzentrisch um die Achse und axial anliegend an das Gehäuse angeordnet ist. Von diesem Ring erstreckt sich der Kragarm radial, tangential oder als Sekante.

Ebenso ist es möglich, dass der Kragarm im Verlauf seiner Erstreckung in radiale oder axiale Richtung gewinkelt ist.

Im Rahmen der Erfindung ergibt sich auch die Möglichkeit, das sich mittels Vorsprüngen oder Vertiefungen im Ringbereich, die in komplementäre Vertiefungen oder Vorsprünge an dem Gehäuse eingreifen, in einen Formschluss mit dem Gehäuse zur Drehmomentabstützung auszubilden. Die axiale Festlegung des Blechs am Gehäuse kann dabei mit Klemm- oder Pressverbindungen zur Transportsicherung erfolgen.

Weiterhin ist es denkbar, dass das Blech Bohrungen zur Befestigung für die Transportsicherung am Gehäuse aufweist.

Vorzugsweise weist der Kragarm seitlich hochgebogene Flanken auf, die am Kragarmende ein u-förmiges Profil bilden. Die Zuleitung für das Hydraulikfluid kann bevorzugt in das u-förmige Profil eingelegt werden.

Weiterhin kann das Gehäuse Teilringe aufweisen, die sich durch das Ringinnere des Ringbereichs des Blechs erstrecken, wobei zwischen den Teilringen Vertiefungen bzw. Unterbrechungen vorgesehen sind, in die die Vorsprünge des Ringbereichs eingreifen.

Weitere Vorteile, Merkmale, Merkmalskombinationen und Eigenschaften der Erfindung werden nachfolgend erläutert anhand eines Ausführungsbeispiels und der Zeichnungen.

Diese zeigen in
Figur 1 ein Schnitt durch eine Ausrückvorrichtung
Figur 2 die Ausrückvorrichtung aus Figur 1 in endmontierter Position an einer Reibungskupplung
Figur 3 ein Detail der Ausrückvorrichtung aus Figur 2
Figur 4 die Transportsicherung zwischen dem Befestigungsflansch und Druckraumgehäuse der Ausrückvorrichtung aus den Figuren 2 und 3 im Detail
Figur 5 eine alternative Ausführungsform der Erfindung mit einem Innenring des Deckellagers, der einstückig mit dem Befestigungsflansch für das Ausrückergehäuse ausgebildet ist
Figur 6 einen Schnitt durch den Verbindungsbereich zwischen Gehäuse und Leitungsadapter mit Nietverbindung gemäß einer ersten Ausführungsform
Figur 7 ein Leitungsadapter mit einem Verbindungsbereich gemäß einer zweiten Ausführungsform
Figur 8 ein zu dem Leitungsadapter aus Figur 7 kompatibles Ausrückergehäuse mit einem passenden Verbindungsbereich
Figur 9 ein Leitungsadapter mit einem Verbindungsbereich gemäß Figur 6
Figur 10 ein Detail aus dem Leitungsadapter aus Figur 9
Figur 11 ein zum Leitungsadapter aus Figur 9 kompatibles Gehäuse mit entsprechendem Verbindungsbereich
Figur 12 ein erfindungsgemäßes Blechteil zur Drehmomentabstützung bei einem konzentrischen Nehmerzylinder
Figur 13 das Überlastschutzblech aus Figur 12 in montierter Position an einer Ausrückvorrichtung

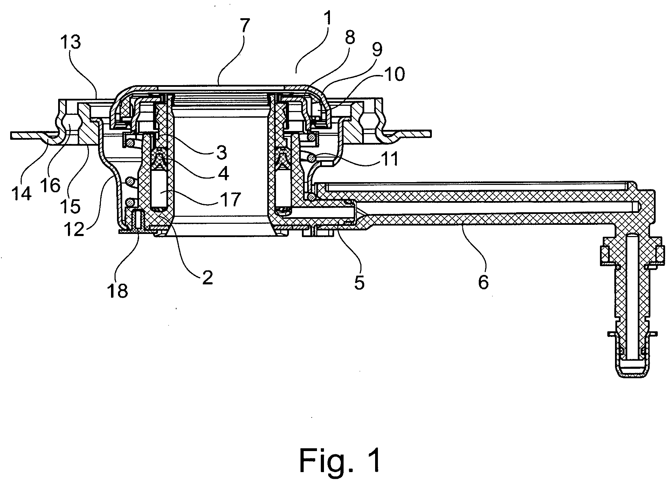

Figur 1 zeigt eine Ausrückvorrichtung 1, die ein Gehäuse 2 aufweist, in dem axial verschieblich ein Ringkolben 3 gelagert ist. Über die Dichtung 4 wird ein abgedichteter Druckraum 17 gebildet, der zur Aufnahme eines hydraulischen Fluids ausgebildet ist. Ein Anschlussbereich 5 am Gehäuse 2 ist zur Verbindung mit einem Leitungsadapter 6 ausgebildet über den das hydraulische Fluid in den Druckraum 17 zugeführt wird. Am Druckraum abgewandten Ende des Kolbens 3 ist ein Ausrücklager 7 festgelegt, das zur Anlage an einer Tellerfeder ein Fahrzeugkupplung ausgebildet ist. Dazu weist das Ausrücklager einen Innenring 8 und einen Außenring 9 auf, zwischen dem Wälzkörper, beispielsweise Kugeln, in einer Laufbahn geführt sind. Der Außenring 9 weist eine Anlagefläche zur Anlage der Tellerfederenden auf, während der Innenring 8 über an sich bekannte Haltemittel mit dem Kolben 3 verbunden ist. Der Kolben 3 befindet sich dabei in einer ausgefahrenen Position, wobei das Ausrücklager 7 teilweise im Innenring 15 des Deckellagers 13 angeordnet ist.

Zwischen dem Ausrücklager 7 und dem Druckraumgehäuse 2 befindet sich die Vorlastfeder 11, mittels derer das Ausrücklager unter Vorlast gegen die Tellerfeder der Kupplung gedrückt wird. Über den Befestigungsflansch 12, der mittels des Befestigungsbauteils 18 am Gehäuse 2 festgelegt, wird das Deckellager 13 mit dem Druckraumgehäuse 2 verbunden. Der Befestigungsflansch 12 ist mittels einer Pressverbindung am Innenring 15 des Deckellagers gehalten, zwischen dem Innenring 15 und dem Außenring 14 befinden sich auch beim Deckellager Wälzkörper, die für eine Verdrehbarkeit des Lagers sorgen.

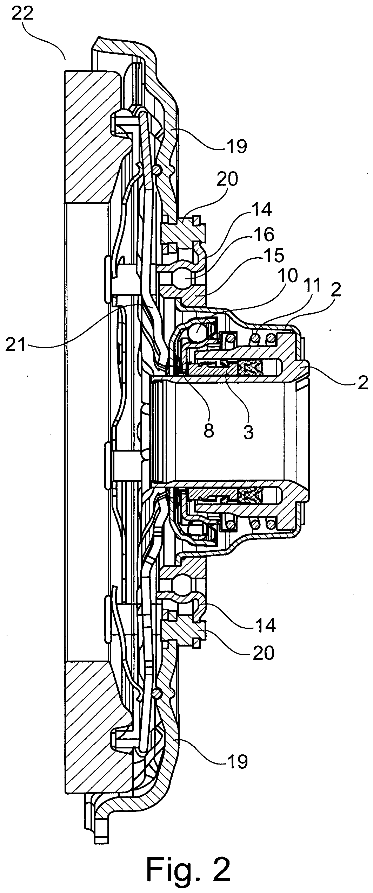

Figur 2 zeigt die Ausrückvorrichtung aus Figur 1 in der montierten Position an einer Kupplung 22. Der Kupplungsdeckel 19 verfügt über Öffnungen für Befestigungsmittel. Der Außenring 14 des Deckellagers weist komplementäre Öffnungen auf, so dass über Niete 20 eine Verbindung zwischen Kupplungsdeckel 19 und Deckellageraußenring 14 hergestellt werden kann. Selbstverständlich können auch andere Verbindungsmittel wie Schrauben, Schweißen, Klemmen etc. zur Verbindung des Außenring des Deckellagers mit den Kupplungsdeckel genutzt werden. Die Tellerfederzungen 21 liegen, wie in Figur 2 zu erkennen, auf dem Außenring 9 des Ausrücklagers auf. Der Kolben 3 ist in Figur 2 in einer eingefahrenen Position gezeigt, in der das Ausrücklager 7, insbesondere die Wälzkörper 10, teilweise über das Gehäuse 2 geschoben sind.

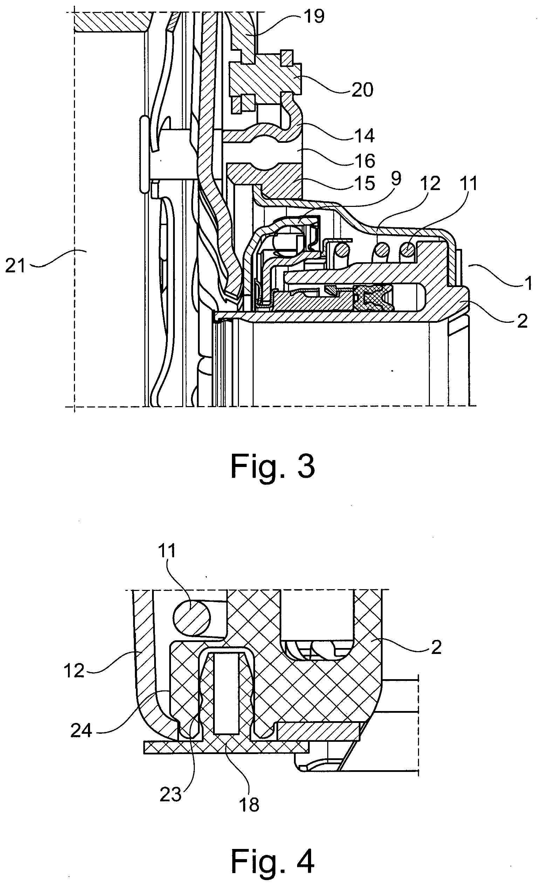

Figur 3 zeigt die Befestigung der Ausrückvorrichtung 1 aus Figur 2 an der Kupplung im Detail. Das Deckellager 13 ist über den Außenring 14 mittels Nieten 20 am Kupplungsdeckel 19 festgelegt. Tellerfederzungen 21 liegen auf dem Außenring 9 des Ausrücklagers auf.

In Figur 4 ist die Befestigung des Befestigungsflanschs 12 am Gehäuse 2 im Detail dargestellt. Das Befestigungsteil 18 greift mit der Tannenzapfengeometrie 23 in die Öffnung 24 am Druckraumgehäuse 2 ein, so dass Reibschluss zwischen dem Befestigungsbauteil 18 und dem Gehäuse 2 die Folge ist. Über den Kopf des Befestigungsbauteils 18 wird der Befestigungsflansch 12 formschlüssig am Gehäuse 2 gehalten. Somit ist die Transportsicherung des Befestigungsflansches 12 und damit des Deckellagers am Gehäuse 2 sichergestellt.

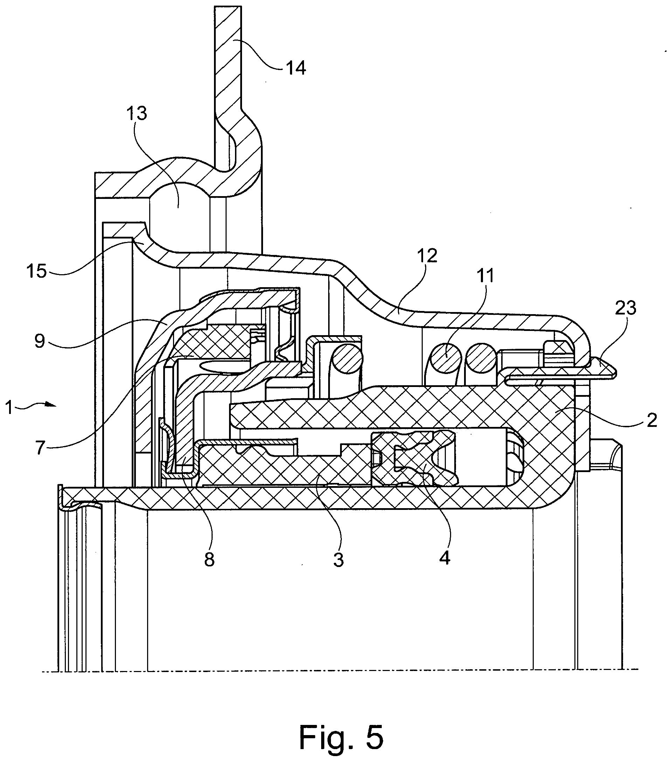

Figur 5 zeigt eine alternative Ausführungsform. Der Befestigungsflansch 12, an dem das Gehäuse 2 des Ausrückers 1 angeordnet ist, ist hier einstückig mit dem Innenring 15 des Deckellagers 13 ausgebildet. Zur Verbindung des Gehäuses 2 mit dem Befestigungsflansch 12 kommt bei dieser Ausführungsform eine Clipsverbindung zum Einsatz, bei der Clipse 23 am Gehäuse durch komplementäre Öffnungen im Befestigungsflansch eingreifen und dort verrasten. Selbstverständlich ist abweichend hiervon auch eine Befestigung des Gehäuses 2 mittels separaten Befestigungsteilen wie in Figur 1-4 gezeigt möglich, ebenso wie die Befestigungsvariante mittels Clipsen auch bei der Ausführungsform in den Figuren 1-4 verwendet werden kann. Die übrige Ausbildung der Ausführungsform in Figur 5 entspricht der in den Figuren 1-4 gezeigten.

Vorteilhaft kann der einstückige Lagerflansch mit Innenring in Figur 5 mittels an sich bekannter Umformverfahren aus Metall, insbesondere Stahlblech gefertigt werden. Hierzu bietet sich beispielsweise eine Fertigung im Tiefziehverfahren an. Es sind aber auch abweichende Herstellverfahren denkbar.

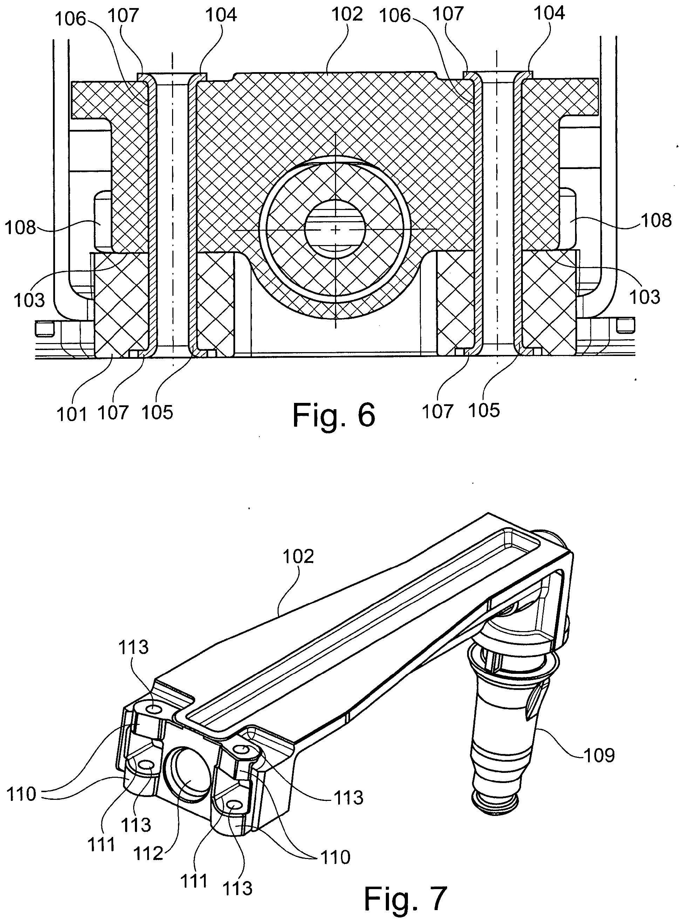

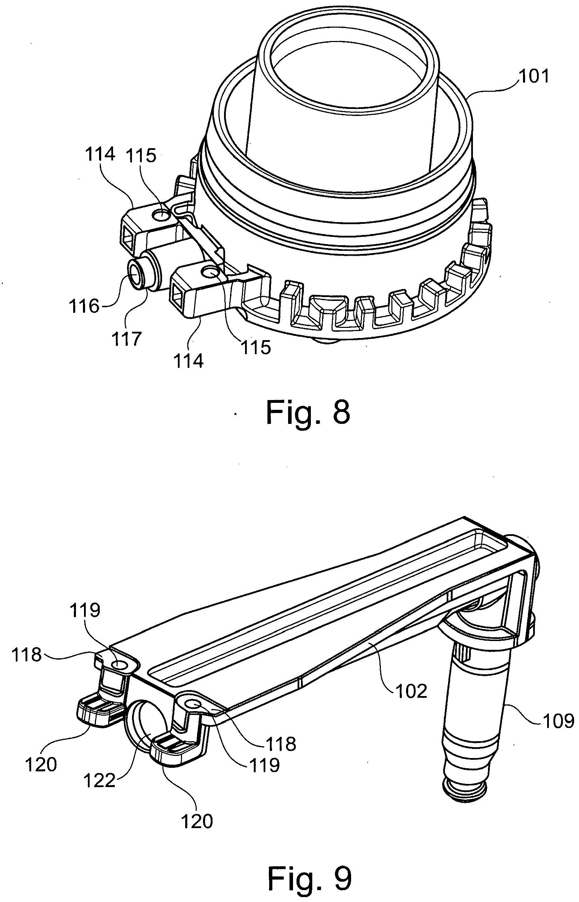

Figur 6 zeigt den Verbindungsbereich zwischen einem Gehäuse 101 und einem Leitungsadapter 102. Die Verbindungsbereiche liegen im Bereich 103 aneinander an und sind durch Niete 104 miteinander formschlüssig verbunden. Die Bohrungen 105 im Gehäuse 101 und 106 im Leitungsadapter sind so ausgeführt, dass die Niete nach den ausbildeten Nietverbindung zwängungsfrei in den Bohrungen sind. Die Endbereiche 107 der Niete sind umgebördelt, um so einen Nietkopf zu bilden und die formschlüssige Verbindung sicherzustellen. In die Vertiefungen 108 am Gehäuse 101 greifen komplementäre Vorsprünge des Leitungsadapters 102 mit Quetschrippen ein (siehe Figuren 9 bis 11).

Figur 7 zeigt einen Leitungsadapter, der ebenfalls eine Ausführungsform darstellt. Der Leitungsadapter 102 weist einen Anschlussbereich 109 auf, der zum Anschluss einer Fluidleitung (nicht gezeichnet) ausgebildet ist. Im Verbindungsbereich zum Gehäuse befinden sich Nietlaschen 110, die zungenartig Öffnungen 111 umfassen, die zum Einführen vom komplementären Laschen am Gehäuse (siehe Figur 8) ausgebildet sind. In den Laschen 110 befinden sich Bohrungen 113, durch die Nieten hindurchgeführt werden können. In die Leitungsöffnung 112 wird ein Anschlusszapfen am Gehäuse eingeführt.

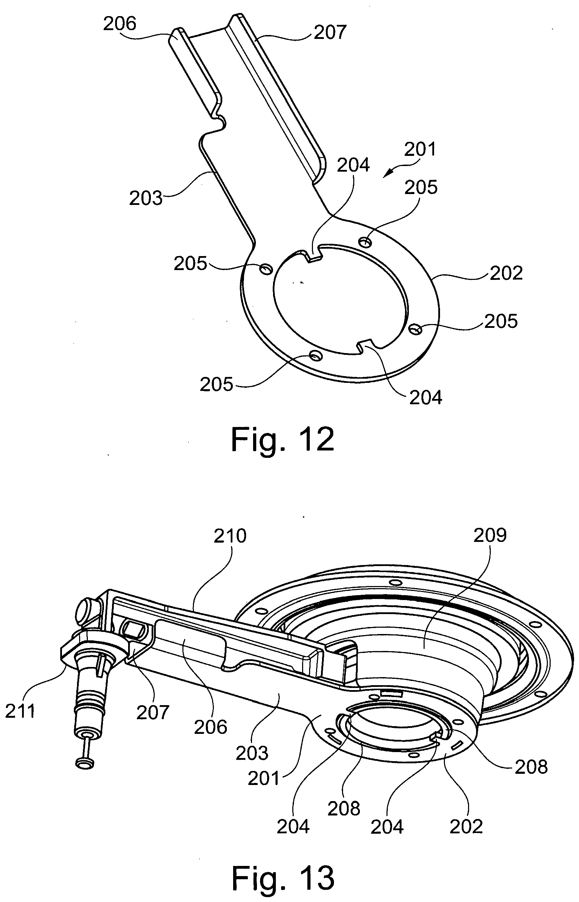

Das Gehäuse 101 in Figur 8 weist einen zum Leitungsadapter in Figur 7 kompatiblen Verbindungsbereich mit Vorsprüngen 114 auf, die Bohrungen 115 zum Hindurchführen der Niete aufweisen. Der Zapfen 116 ist zum Einstecken in die Leitungsöffnung 112 des Leitungsadapters 102 aus Figur 7 ausgebildet und weist eine Ringschulter 117 auf, die als Dichtsitz für eine Dichtung zur Abdichtung der Verbindung dient.

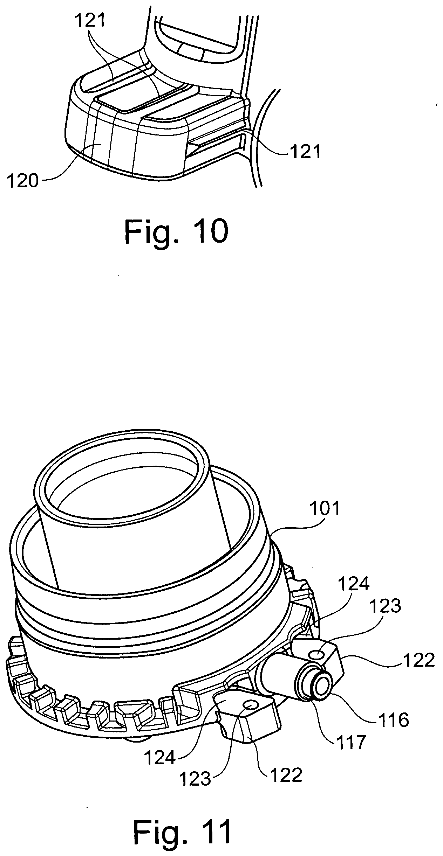

Figur 9 zeigt einen Leitungsadapter der Ausführungsform nach Figur 6 in einer Gesamtdarstellung. Die Verbindungsbereiche 118 sind mit Bohrungen 119 zur Aufnahme der Niete versehen. Vorsprünge 120 mit Quetschrippen (siehe Figur 10) sind neben der Leitungsöffnung 112 vorgesehen, die in komplementäre Öffnungen am Gehäuse 101 eingeschoben werden können. An den Vorsprüngen 120 befinden sich, wie in Figur 10 erkennbar, Quetschrippen 121, die beim Einschieben die komplementären Öffnungen 124 (siehe Figur 11) des Gehäuses 101 deformiert werden und so für einen Reibschluss zwischen Gehäuse 101 und Leitungsadapter 102 sorgen.
In Figur 11 ist am Gehäuse 101 ein Verbindungsbereich ausgebildet, der Vorsprünge 122 mit Bohrungen 123 zur Aufnahme von Nieten aufweist. Oberhalb der Vorsprünge 123 befinden sich Vertiefungen 124, die komplementär zu den Vorsprüngen 120 am Leitungsadapter ausgebildet sind und in Verbindung mit den Quetschrippen 121 an den Vorsprüngen 120 eine reibschlüssige Verbindung zwischen Gehäuse 101 und Leitungsadapter 102 zur Verfügung stellen. Der Zapfen 116 mit der Ringschulter 117 dient wieder zur Herstellung der dichten Verbindung zwischen Leitungsadapter und Gehäuse.
Eine Überlastschutzvorrichtung 201 gemäß Figur 12 weist einen Ringbereich 202 auf, von dem sich ein Kragarmbereich 203 erstreckt. Am Ringbereich 202 befinden sich Vorsprünge 204, die zum Eingriff in komplementäre Nuten oder Vertiefungen am Gehäuse eines Ausrückers (siehe Figur 13) ausgebildet sind. Bohrungen 205 sind für Befestigungen für die Transportsicherung am Ausrücker vorgesehen. Der Kragarm weist seitlich hochgebogene Flanken 206 und 207 auf, die am Kragarmende ein U-förmiges Profil bilden, in das die Zuleitung der Ausrückvorrichtung eingelegt werden kann.

In Figur 13 ist der Überlastschutz aus Figur 12 in montierter Position an einem Gehäuse 209 dargestellt. Der Ringbereich 202 des Überlastschutzblechs 201 dabei in axialer Richtung konzentrisch zur gemeinsamen Achse am Ausrückergehäuse festgelegt. Das Ausrückergehäuse weist Teilringe 208 auf, die sich durch das Ringinnere des Ringteils des Überlastschutzblechs erstrecken, wobei zwischen den Teilringen 208 Unterbrechungen bestehen, in die die Vorsprünge 204 des Ringbereichs 202 eingreifen, um derart eine Verdrehsicherung des Überlastschutzblechs 201 relativ zum Ausrückergehäuse 209 zu bilden. Ein auf das Überlastschutzblech 201 aufgebrachtes Drehmoment wird also über die Vorsprünge 204 und die Teilringe 208 am Gehäuse 209 des Ausrückers abgestützt. Vom Ringbereich 202 weg erstreckt sich der Kragarm Teil 203, der im Wesentlichen parallel zur Zuleitung 210 des Ausrückers angeordnet ist. Im U-förmigen Bereich am Ende des Kragarms, der durch die Hochbiegungen 206 und 207 gebildet wird, ist die Zuleitung 210 zumindest teilweise eingelegt, sodass bei einer auftretenden Momentenbelastung auf die Zuleitung sich diese zunächst leicht verformen kann, bis sie zur Anlage an den Halteblechen 206 oder 207 gelangt und derart gegen eine weitere Verbiegung abgestützt wird. Über das Abstützelement 211 wird die Zuleitung zur Schleppmomentabstützung an der Getriebeglocke (nicht gezeichnet) abgestützt.

### Bezugszeichenliste

- 1: Ausrückvorrichtung
- 2: Gehäuse
- 3: Ringkolben
- 4: Dichtung
- 5: Anschlussbereich
- 6: Leitungsadapter
- 7: Ausrücklager
- 8: Innenring
- 9: Außenring
- 11: Vorlastfeder
- 12: Befestigungsflansch
- 13: Deckellager
- 14: Außenring
- 15: Innenring
- 18: Befestigungsbauteil
- 19: Kupplungsdeckel
- 20: Niete
- 21: Tellerfederzunge
- 23: Halteclipse
- 101: Gehäuse
- 102: Leitungsadapter
- 103: Bereich
- 104: Niete
- 105: Bohrungen
- 107: Endbereiche
- 108: Vertiefungen
- 109: Anschlussbereich
- 110: Nietlaschen
- 111: zungenartige Öffnungen
- 112: Leitungsöffnungen
- 113: Bohrungen
- 114: Vorsprünge
- 115: Bohrungen
- 116: Zapfen
- 117: Ringschulter
- 118: Verbindungsbereiche
- 119: Bohrungen
- 120: Vorsprünge
- 121: Quetschrippen
- 122: Vorsprünge
- 123: Bohrungen
- 124: Vertiefungen
- 201: Überlastschutzvorrichtung
- 202: Ringbereich
- 203: Kragarmbereich
- 204: Vorsprünge
- 205: Bohrungen
- 206: hochgebogene Flanken
- 207: hochgebogene Flanken
- 208: Teilringe
- 209: Gehäuse
- 210: Zuleitung
- 211: Abstützelement

## Patentansprüche

1. Vorrichtung zum Ausrücken einer Kupplung, insbesondere einer Kupplung im Antriebsstrang eines Kraftfahrzeugs, mit einem Gehäuse (209), das konzentrisch um eine Achse angeordnet ist und einen Druckraum ausbildet, in dem ein axial beweglicher Ringkolben angeordnet ist, und das Gehäuse (209) über ein Deckellager an einem Deckel der Kupplung abgestützt ist, und eine Zuleitung (210) für die Zuführung eines hydraulischen Fluids in den Druckraum mit dem Gehäuse (209) verbunden ist, und zur Ausbildung eines Überlastschutzes ein Blech drehfest mit dem Gehäuse (209) verbunden ist, **dadurch gekennzeichnet, dass** das Blech einen Kragarm (203) parallel zur Zuleitung (210) aufweist, wobei an dem Kragarmende wenigstens ein Haltearm zur Abstützung der Zuleitung (210) gegen Momentenbelastung angeordnet ist und
das Blech einen Ringbereich (202) aufweist, der konzentrisch um die Achse und axial anliegend an das Gehäuse (209) angeordnet ist, und sich der Kragarm (203) radial, tangential oder als Sekante von dem Ringbereich (202) erstreckt.

2. Vorrichtung nach Anspruch 1, **dadurch gekennzeichnet, dass** der Kragarm (203) gewinkelt ausgeführt ist.

3. Vorrichtung nach einem der vorangehenden Ansprüche, **dadurch gekennzeichnet, dass** der Ringbereich (202) Vorsprünge (204) und/oder Vertiefungen aufweist, die in komplementäre Vertiefungen und/oder Vorsprünge an dem Gehäuse (209) eingreifen, und derart einen Formschluss gegen Verdrehungen bilden.

4. Vorrichtung nach einem der vorangehenden Ansprüche, **dadurch gekennzeichnet, dass** das Blech mittels einer Klemm- oder Pressverbindung als Transportsicherung mit dem Gehäuse (209) in axialer Richtung verbunden ist.

5. Vorrichtung nach einem der vorangehenden Ansprüche, **dadurch gekennzeichnet, dass** das Blech Bohrungen (205) zur Befestigung für die Transportsicherung am Gehäuse (209) aufweist.

6. Vorrichtung nach einem der vorangehenden Ansprüche, **dadurch gekennzeichnet, dass** der Kragarm (203) seitlich hochgebogene Flanken (206, 207) aufweist, die am Kragarmende ein u-förmiges Profil bilden.

7. Vorrichtung nach Anspruch 6, **dadurch gekennzeichnet, dass** die Zuleitung (210) in das u-förmige Profil eingelegt ist.

8. Vorrichtung nach Anspruch 3, **dadurch gekennzeichnet, dass** das Gehäuse (209) Teilringe (208) aufweist, die
sich durch das Ringinnere des R ingteils (202) des Überlastschutzblechs erstrecken,
wobei zwischen den Teilringen (208) Unterbrechungen vorgesehen sind, in die die Vorsprünge (204) des Ringbereichs (202) eingreifen.

## Claims

1. Apparatus for disengaging a clutch, in particular a clutch in the drive train of a motor vehicle, having a housing (209) which is arranged concentrically about an axis and configures a pressure space, in which an axially movable annular piston is arranged, and the housing (209) is supported via a cover bearing on a cover of the clutch, and a feed line (210) for feeding a hydraulic fluid into the pressure space is connected to the housing (209), and a metal sheet is connected fixedly to the housing (209) so as to rotate with it in order to configure an overload protection means, **characterized in that** the metal sheet has a cantilever arm (203) parallel to the feed line (210), at least one holding arm for supporting the feed line (210) against torque loading being arranged at the cantilever arm end, and the metal sheet having an annular region (202) which is arranged concentrically about the axis and so as to bear axially against the housing (209), and the cantilever arm (203) extending radially, tangentially or as a secant from the annular region (202) .

2. Apparatus according to Claim 1, **characterized in that** the cantilever arm (203) is of angled configuration.

3. Apparatus according to either of the preceding claims, **characterized in that** the annular region (202) has projections (204) and/or depressions which engage into complementary depressions and/or projections on the housing (209), and form a positively locking connection against rotations as a result.

4. Apparatus according to one of the preceding claims, **characterized in that** the metal sheet is connected to the housing (209) in the axial direction by means of a clamped or pressed connection as a transport securing means.

5. Apparatus according to one of the preceding claims, **characterized in that** the metal sheet has bores (205) for fastening to the housing (209) for the transport securing means.

6. Apparatus according to one of the preceding claims, **characterized in that** the cantilever arm (203) has flanks (206, 207) which are bent upwards laterally and form a U-shaped profile at the cantilever arm end.

7. Apparatus according to Claim 6, **characterized in that** the feed line (210) is inserted into the U-shaped profile.

8. Apparatus according to Claim 3, **characterized in that** the housing (209) has part rings (208) which extend through the annular interior of the annular part (202) of the overload protection metal sheet, interruptions being provided between the part rings (208), into which interruptions the projections (204) of the annular region (202) engage.

## Revendications

1. Dispositif de débrayage d'un embrayage, en particulier d'un embrayage dans la chaîne cinématique d'un véhicule automobile, comprenant un boîtier (209) qui est disposé concentriquement autour d'un axe et qui constitue un espace de pression dans lequel est disposé un piston annulaire déplaçable axialement, et le boîtier (209) étant supporté par le biais d'un palier de coiffe sur une coiffe de l'embrayage, et une conduite d'alimentation (210) pour l'alimentation d'un fluide hydraulique dans l'espace de pression étant connectée au boîtier (209), et, pour la réalisation d'une protection contre les surcharges, une tôle étant connectée de manière solidaire en rotation au boîtier (209), **caractérisé en ce que** la tôle présente un cantilever (203) parallèlement à la conduite d'alimentation (210), au moins un bras de retenue pour supporter la conduite d'alimentation (210) contre les contraintes de couple étant disposé sur l'extrémité du cantilever, et
la tôle présente une région annulaire (202) qui est disposée concentriquement autour de l'axe et qui s'applique axialement contre le boîtier (209), et le cantilever (203) s'étend radialement, tangentiellement ou sous forme de sécante de la région annulaire (202).

2. Dispositif selon la revendication 1, **caractérisé en ce que** le cantilever (203) est réalisé sous forme coudée.

3. Dispositif selon l'une quelconque des revendications précédentes, **caractérisé en ce que** la région annulaire (202) présente des saillies (204) et/ou des renfoncements qui s'engagent dans des renfoncements complémentaires et/ou des saillies complémentaires sur le boîtier (209) et qui forment de ce fait un engagement par correspondance géométrique antirotation.

4. Dispositif selon l'une quelconque des revendications précédentes, **caractérisé en ce que** la tôle est connectée au boîtier (209) dans la direction axiale au moyen d'une liaison par serrage ou par pressage en tant que fixation de transport.

5. Dispositif selon l'une quelconque des revendications précédentes, **caractérisé en ce que** la tôle présente des alésages (205) pour la fixation au boîtier (209) pour la fixation de transport.

6. Dispositif selon l'une quelconque des revendications précédentes, **caractérisé en ce que** le cantilever (203) présente des flancs redressés latéralement (206, 207) qui forment au niveau de l'extrémité du cantilever un profilé en forme de U.

7. Dispositif selon la revendication 6, **caractérisé en ce que** la conduite d'alimentation (210) est introduite dans le profilé en forme de U.

8. Dispositif selon la revendication 3, **caractérisé en ce que** le boîtier (209) présente des bagues partielles (208) qui s'étendent à travers l'intérieur annulaire de la partie annulaire (202) de la tôle de protection contre les surcharges, des interruptions étant prévues entre les bagues partielles (208), dans lesquelles s'engagent les saillies (204) de la région annulaire (202).
